# EUROPEAN PATENT APPLICATION

(11) **EP 1 061 736 A1**
(43) Date of publication of application: **20.12.2000**
(21) Application number: 00303964.1
(22) Date of filing: 11.05.2000
(51) Int. Cl.: H04N 5/44, H04N 5/21

(54) **Intermediate frequency tuning circuit**

(30) Priority: 07.06.1999 JP 15930199
(71) Applicant: ALPS ELECTRIC CO., LTD., Ota-ku Tokyo 145 (JP)
(72) Inventor: Ogasawara, Yutaka, c/o Alps Electric Co., Ltd., Tokyo 145 (JP)
(74) Representative: Kensett, John Hinton

(57) **Abstract**

A damper circuit (11) is provided in an intermediate frequency tuning circuit (7), and a switch (14) for opening and closing the damper circuit is interlocked with an analog/digital change-over switch (4). By opening or closing a damper, the quality factor Q of the intermediate frequency tuning circuit and the peak frequency are changed over to values most suitable for the reception of an analog signal or a digital signal. At the time of reception of a digital signal, the digital signal is difficult to undergo disturbance from an adjacent analog channel without lowering the level of the analog signal.

## Description

The present invention relates to a television tuner capable of receiving an analog television signal or a digital television signal. Particularly, the invention is concerned with a television tuner which is difficult to be disturbed by an analog television signal in an adjacent channel at the time of reception of a digital television signal.

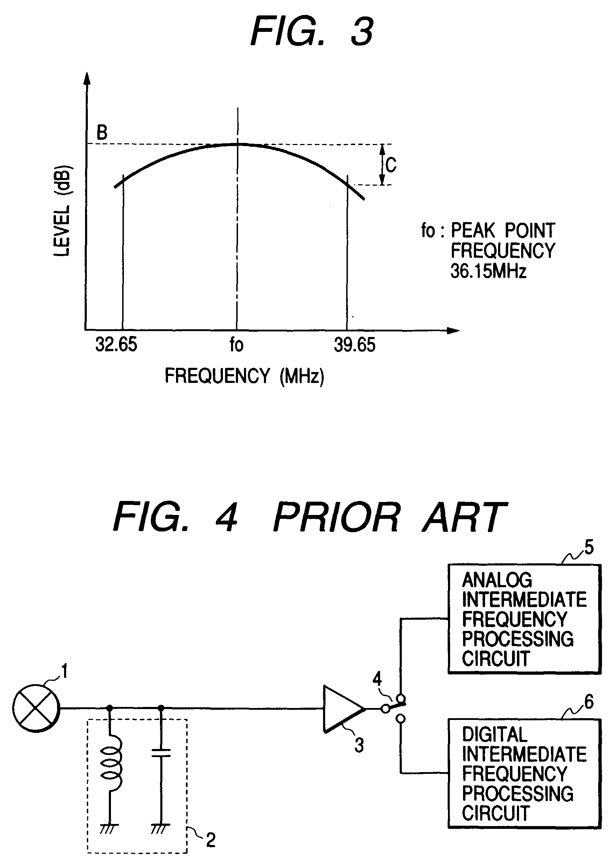

Fig. 4 shows the configuration of an intermediate frequency circuit section in a conventional television tuner. A mixer 1 performs frequency conversion of a received analog television signal (hereinafter referred to as "analog signal") or digital television signal ("digital signal" hereinafter). An intermediate frequency signal outputted from the mixer 1 is sent to an intermediate frequency amplifier 3 via an intermediate frequency tuning circuit 2 and is then fed to an intermediate frequency processing circuit 5 or 6 in accordance with operation of an analog/digital change-over switch 4.

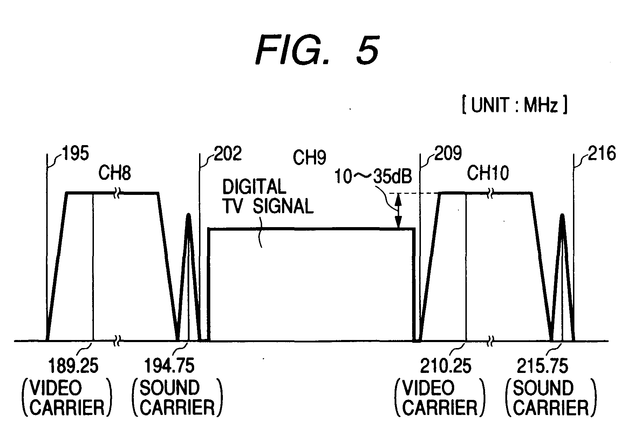

A digital television broadcasting using a ground wave is about to be started on trial. The digital television broadcasting is performed using vacant channels other than the channels allocated in the conventional analog television broadcasting. Thus, at present, both digital signal channels and analog signal channels are mixed together. Fig. 5 is a frequency band diagram from channel 8 to channel 10, with channel 9 allocated to a digital signal.

As shown in Fig. 5, a digital signal is usually transmitted at a level lower by 10 to 35 dB than the level of an analog signal. This is for preventing a conventional analog signal from being disturbed by a digital signal in case of receiving the analog signal in the presence of the digital signal in an adjacent channel.

Conversely, in case of receiving a digital signal in the presence of an analog signal in an adjacent channel, a disturbance signal such as beat based on the analog signal in the adjacent channel occurs in the band of an intermediate frequency signal due to tertiary distortion of the intermediate frequency amplifier 3. In this case, since the level of the digital signal is low for the foregoing reason, the degree of disturbance caused by the distortion generated in the band is relatively large.

One countermeasure is lowering the input level of the intermediate frequency amplifier 3. But this results in lowering of the level of the analog signal for which it is not necessary to lower the level, thus giving rise to the problem that the SN ratio lowers or the output level is deficient at the time of reception of the analog signal.

It is an object of the present invention to solve the above-mentioned problem and provide a television tuner wherein, at the time of receiving a digital signal in the presence of an analog signal in an adjacent channel, the digital signal is difficult to be disturbed by the analog signal without lowering the level of the analog signal.

According to the present invention, for achieving the above-mentioned object, there is provided a television tuner comprising a mixer which converts a received analog or digital television signal into an intermediate frequency signal, an intermediate frequency amplifier disposed at the back of the mixer, and a tuning circuit which is disposed between the mixer and the intermediate frequency amplifier and which allows the intermediate frequency signal to pass therethrough, wherein the quality factor Q of the tuning circuit is set smaller at the time of reception of the digital television signal than at the time of reception of the analog television signal.

Preferably, the tuning circuit comprises a parallel resonance circuit and a damper circuit, and the value of Q is changed over by connecting or disconnecting the damper circuit to or from the parallel resonance circuit.

Preferably, the damper circuit is constituted of a parallel circuit of a resistor and a capacitor.

Embodiments of the invention will now be described, by way of example only, with reference to the accompanying drawings, in which:
Fig. 1 is a configuration diagram of an intermediate frequency circuit in a television tuner according to the present invention;
Fig. 2 is a transmission characteristic diagram of an analog signal in the television tuner according to the present invention;
Fig. 3 is a transmission characteristic diagram of a digital signal in the television tuner according to the present invention;
Fig. 4 is a configuration diagram of an intermediate frequency circuit in a conventional television tuner; and
Fig. 5 is a frequency band diagram.

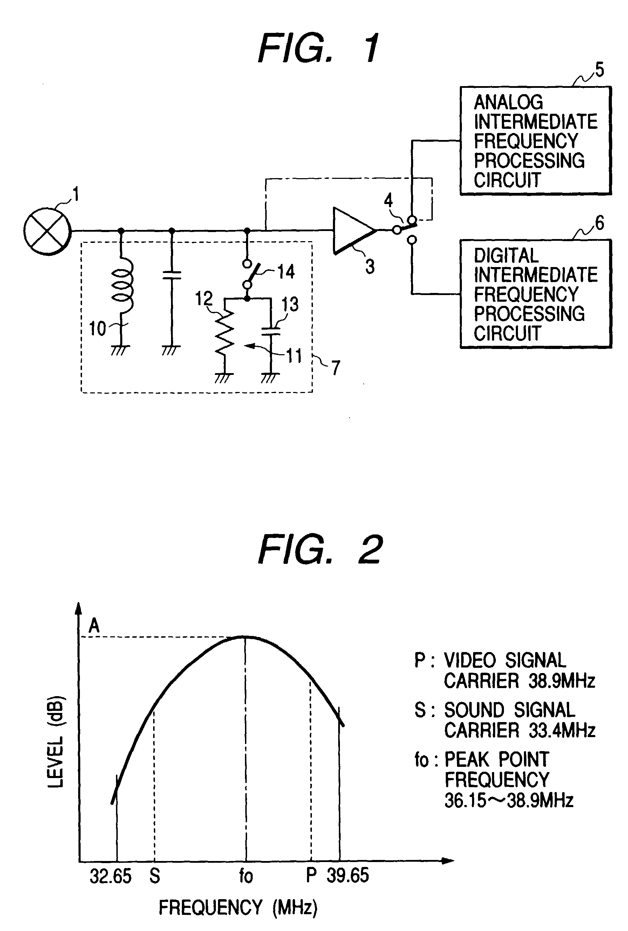

A television tuner according to an embodiment of the present invention will be described below with reference to Figs. 1 to 3. Fig. 1 shows the configuration of an intermediate frequency circuit used in this embodiment. This intermediate frequency circuit is different from the conventional one shown in Fig. 4 in that a tuning circuit 7 is composed of a parallel resonance circuit 10 and a damper circuit 11. This is a characteristic point of the present invention. Other components, which are mixer 1, amplifier 3, and analog/digital change-over switch 4, are the same as in the prior art. The damper circuit 11 is made up of a resistor 12 and a capacitor 13 which are connected in parallel with each other. In accordance with operation of a switch 14 the damper circuit 11 can be connected in parallel with the parallel resonance circuit 10 and disconnected therefrom.

The switch 14 is interlocked with the analog/digital change-over switch 4. More specifically, at the time of reception of an analog signal, the switch 14 in the damper circuit 11 is open and disconnected from the parallel resonance circuit 10, with the change-over switch 4 being located on the analog side. On the other hand, at the time of reception of a digital signal, the switch 14 is closed to connect the damper circuit 11 in parallel with the parallel resonance circuit 10, and at the same time the switch 4 is changed over to the digital side.

Fig. 2 shows a transmission characteristic of the intermediate frequency circuit in an analog signal receiving mode. The parallel resonance circuit 10 has a high Q, with a peak present somewhat on P side relative to the middle between a video IF signal P and a audio IF signal S, thus showing a high sharpness characteristic. The waveform shown in Fig. 2 is suitable for the reception of an analog signal, permitting the attainment of a sufficient output and an appropriate SN ratio.

On the other hand, in the reception of a digital signal it is required to attain a transmission characteristic which is as flat as possible over a wide band. Fig. 3 shows a transmission characteristic of the intermediate frequency circuit in a digital signal receiving mode with the damper circuit 11 connected to the parallel resonance circuit 10. The value of Q of the tuning circuit 7 decreases under the action of the resistor 12 in the damper circuit 11. As a result, a peak level B drops 5 to 15 dB in comparison with a peak level A in analog signal reception and a level deviation C in the intermediate frequency band becomes smaller.

In case of applying the present invention to the European channel for example, there is made a setting so that the frequency, f₀, of a peak point in tuning characteristic becomes 36.15 MHz which is approximately the center of the intermediate frequency band under the action of the capacitor 13 in the damper circuit 11. Thus, in the presence of both resistor 12 and capacitor 13 there is attained a transmission characteristic having a peak nearly centrally of the intermediate frequency band and symmetric right and left in a nearly flat form, affording a waveform suitable for the reception of a digital signal.

Where the present invention is applied to the European channel for example, it is preferable that the resistance value of the resistor 12 be in the range of 30 to 1 k[Ω] and that the capacitance of the capacitor 13 be 50 p[F] or less.

In the television tuner according to the present invention, as set forth above, the quality factor Q of the intermediate frequency tuning circuit and the peak frequency position are changed over by opening and closing the damper circuit. In receiving a digital signal, the value of Q is made smaller than in receiving an analog signal, and the peak frequency position is established so as to have a value suitable for each signal reception. By so doing, it is possible to make disturbance from an adjacent analog channel difficult at the time of reception of a digital signal.

## Claims

1. A television tuner comprising:
a mixer which converts a received analog or digital television signal into an intermediate frequency signal;
an intermediate frequency amplifier disposed at the back of the mixer; and
a tuning circuit which is disposed between the mixer and the intermediate frequency amplifier and which allows the intermediate frequency signal to pass therethrough,
wherein the quality factor Q of the tuning circuit is set smaller at the time of reception of the digital television signal than at the time of reception of the analog television signal.

2. A television tuner according to claim 1, wherein the tuning circuit comprises a parallel resonance circuit and a damper circuit, and the value of Q is changed over by connecting or disconnecting the damper circuit to or from the parallel resonance circuit.

3. A television tuner according to claim 2, wherein the damper circuit is constituted of a parallel circuit of a resistor and a capacitor.
